**Europäisches Patentamt**

**European Patent Office**

**Office européen des brevets**

(19)

(11) Veröffentlichungsnummer : **0 352 276 B1**

(12) ## EUROPÄISCHE PATENTSCHRIFT

(45) Veröffentlichungstag der Patentschrift :
05.08.92 Patentblatt 92/32

(51) Int. Cl.⁵ : **B60K 28/16,** B60T 8/32

(21) Anmeldenummer : **88902436.0**

(22) Anmeldetag : **23.02.88**

(86) Internationale Anmeldenummer :
**PCT/EP88/00131**

(87) Internationale Veröffentlichungsnummer :
**WO 88/07456 06.10.88 Gazette 88/22**

(54) **ANTRIEBSSCHLUPFREGELSYSTEM.**

(30) Priorität : **01.04.87 DE 3710870**

(43) Veröffentlichungstag der Anmeldung :
**31.01.90 Patentblatt 90/05**

(45) Bekanntmachung des Hinweises auf die
Patenterteilung :
**05.08.92 Patentblatt 92/32**

(84) Benannte Vertragsstaaten :
**AT DE FR GB SE**

(56) Entgegenhaltungen :
**EP-A- 0 128 583
EP-A- 0 229 249
US-A- 3 776 357
Auto, Motor und Sport, No. 25/1985, 11. Dezember 1985 (Stuttgart, DE;) H: Sauer: "Bloss nicht durchdrehen", Seiten 29, 30**

(73) Patentinhaber : **ROBERT BOSCH GMBH
Postfach 30 02 20
W-7000 Stuttgart 30 (DE)**

(72) Erfinder : **SIGL, Alfred
Waldeck 8
W-7126 Sersheim (DE)**
Erfinder : **MEURER, Martin
Bahnhofsvorplatz 2
W-5590 Cochem/Mosel (DE)**

(74) Vertreter : **Kammer, Arno, Dipl.-Ing.
ROBERT BOSCH GmbH Zentralabteilung
Patente Postfach 30 02 20
W-7000 Stuttgart 30 (DE)**

**Beschreibung**

Die Erfindung betrifft ein Antriebsschlupfregelsystem mit den Merkmalen des Oberbegriffs des Anspruchs 1.

Wenn an allen Rädern angetriebene Fahrzeuge auf niedrigem Untergrund anfahren, können alle Räder gegenüber der Fahrzeugbeschleunigung stärker beschleunigt werden. Bei hohem Reibwert wird dagegen die Radbeschleunigung mit der Fahrzeugbeschleunigung übereinstimmen. Aufgrund dieser Situation ist es schwierig, eine Referenzgröße zu bilden, die man zur Feststellung von Radschlupf (Antriebsschlupf) aber benötigt.

Aufgabe und Lösung

Der Erfindung liegt daher die Aufgabe zugrunde, eine Lösung für die Bildung der Referenzgröße zu schaffen.

Diese Aufgabe wird durch die im Anspruch 1 angegebene Aufgabe gelöst.

Figurenbeschreibung

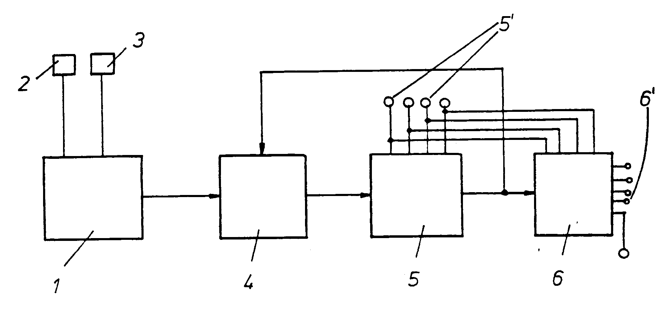

In der Zeichnung ist als Ausführungsbeispiel ein Blockschaltbild zur Durchführung der Erfindung gezeigt. In einem Rechnerblock 1, dem die Drosselklappenstellung $D_K$ von einem Meßwertgeber 2 und die Motordrehzahl $n_{mot}$ von einem Meßwertgeber 3 zugeführt wird, wird aus den zugeführten Größen das momentan vorhandene Antriebsmoment A gemäß der Beziehung

$$A = K_1 \cdot D_K + K_2 \cdot n_{mot} + K_3$$

berechnet, wobei $K_i$ Konstante sind, die von den verschiedenen Motorbauarten und deren spezifischen Motorkennung (Otto-Diesel-Saug- oder Lada-Motore) abhängen. Das Antriebsmoment kann auch aus einem geeigneten abgelegten Motorkennfeld ermittelt werden.

Die ermittelte Größe A wird zusammen mit der Referenzgröße (als Fahrzeuggeschwindigkeit) aus einem Ausgang des Blocks 5 einem weiteren Rechnerblock 4 zugeführt, der aus diesem momentanen Antriebsmoment und der Fahrzeuggeschwindigkeit die maximal mögliche Fahrzeugbeschleunigung $a_{Fmax}$ unter Berücksichtigung der gerade vorhandenen Getriebeübersetzung nach der Beziehung

$$a_{Fmax} = c_1 \cdot A + c_2 \cdot \omega + c_3 v_F + c_4$$

berechnet, wobei $c_i$ Konstanten sind, die von den verschiedenen Fahrzeugparametern (dynamischer Radradius, Luftwiderstandsbeiwert, Fahrzeuggewicht usw.) und den Parametern des Antriebsstranges (Getriebekenndaten, Trägheitsmomente) abhängen und $\omega$ die Radbeschleunigung ist.

Dieser Beschleunigungswert wird einem Block 5 zugeführt, dem auch über Klemmen 5′ den Radgeschwindigkeiten entsprechende Signale zugeführt werden, und der daraus die der Fahrzeuggeschwindigkeit angenäherte Referenzgröße bildet. Die im Augenblick maximal mögliche Fahrzeugbeschleunigung wird dabei zur Begrenzung des Anstiegs der Fahrzeuggeschwindigkeit benutzt, d.h., wenn von den Radgeschwindigkeiten her ein stärkerer Anstieg signalisiert wird, wird dieser nicht zugelassen, sondern nur ein Anstieg mit der im Augenblick maximal möglichen Fahrzeugbeschleunigung. Die im Block 5 gebildete Referenzgröße wird dann einem Block 6 zugeführt, der aus den zugeführten Radgeschwindigkeiten und der Referenzgröße Regelsignale zur Bremsung einzelner Räder und/oder zur Reduzierung des Motormoments erzeugt (Klemmen 6′). Wie schon erwähnt, wird die Referenzgröße als Fahrzeuggeschwindigkeit dem Block 4 über eine Leitung 7 zugeführt.

**Patentansprüche**

1. Antriebsschlupfregelsystem für ein an allen Fahrzeugrädern angetriebenes Fahrzeug, bei welchem Regelsystem aus den Geschwindigkeitssignalen der Räder und einer der Fahrzeuggeschwindigkeit angenäherten Bezugsgröße, die aus den Radgeschwindigkeitssignalen abgeleitet wird, Schlupfwerte gewonnen werden, die zur geregelten Bremsung der Räder und/oder zur Regelung des Antriebsmoments im Sinne einer Vermeidung von Antriebsschlupf ausgenutzt werden, dadurch gekennzeichnet, daß das jeweilige vorhandene Antriebsmoment des Motors bestimmt wird, daß daraus die maximal mögliche Fahrzeugbeschleunigung ermittelt wird und daß die Steigung der Referenzgröße auf diese maximal mögliche Fahrzeugbeschleunigung begrenzt wird.

2. Antriebsschlupfregelsystem nach Anspruch 1, dadurch gekennzeichnet, daß das Antriebsmoment des Motors aus der gemessenen Drosselklappenstellung und der gemessenen Motordrehzahl bestimmt wird.

3. Antriebsschlupfregelsystem nach Anspruch 1 oder 2, dadurch gekennzeichnet, daß bei der Ermittlung der maximal möglichen Beschleunigung die kinetische Energie im Antriebsstrang und vorhandene Totzeiten berücksichtigt werden.

4. Antriebsschlupfregelsystem nach einem der Ansprüche 1 bis 3, dadurch gekennzeichnet, daß für die bei der Ermittlung der maximal möglichen Beschleunigung erforderliche Berücksichtigung der Übersetzung des Getriebes diese aus dem Vergleich der Motordrehzahl und Fahrzeüggeschwindigkeit gewonnen wird.

## Claims

1. Drive-slip control system for a vehicle driven at all vehicle wheels, in which control system slip values are obtained from the speed signals of the wheels and a reference parameter, which is derived from the wheel speed signals and approximates to the vehicle speed, these slip values being used for controlled braking of the wheels and/or for controlling the drive torque so as to avoid drive slip, <u>characterised in that</u> the respective engine drive torque present is determined, in that the maximum possible vehicle acceleration is determined from this drive torque and in that the rate of increase of the reference parameter is limited to this maximum possible vehicle acceleration.

2. Drive-slip control system according to Claim 1, characterised in that the engine drive torque is determined from the measured throttle butterfly position and the measured engine speed.

3. Drive-slip control system according to Claim 1 or 2, characterised in that the kinetic energy in the drive train and any delay periods present are taken into account in determining the maximum possible acceleration.

4. Drive-slip control system according to one of Claims 1 to 3, characterised in that in order to take account of the transmission ratio, which is required for determining the maximum possible acceleration, this transmission ratio is obtained by comparing the engine speed and the vehicle speed.

## Revendications

1. Système régulateur anti-patinage des roues pour un véhicule ayant toutes ses roues motrices, dans lequel, à partir de signaux de vitesse issus des roues et d'une valeur de référence proche de la vitesse du véhicule établie à partir de ces mêmes signaux, les valeurs de patinage sont déterminées et utilisées pour un freinage contrôlé des roues et/ou pour une commande du couple moteur dans le sens de l'élimination du patinage, <u>caractérisé en ce que</u>, à partir du couple d'entraînement du moteur déterminé à tout instant, l'accélération maximale possible du véhicule est établie et imposée comme limite à la croissance de la grandeur de référence.

2. Système anti-patinage selon la revendication 1, caractérisé en ce que le couple d'entraînement est déterminé à partir de valeurs mesurées représentatives de la position du papillon des gaz et de la vitesse de rotation du moteur.

3. Système anti-patinage selon la revendication 1 ou 2, caractérisé en ce que la détermination de l'accélération maximale possible prend en compte l'énergie cinétique de la ligne de transmission et les temps de retard existants.

4. Système anti-patinage selon une des revendications 1 à 3, caractérisé en ce que pour la prise en compte du rapport de transmission, nécessaire pour établir l'accélération maximale possible, on détermine ce rapport par comparaison entre la vitesse de rotation du moteur et la vitesse du véhicule.